# EUROPEAN PATENT APPLICATION

(11) **EP 4 461 843 A1**
(43) Date of publication of application: **13.11.2024**
(21) Application number: 23770533.0
(22) Date of filing: 07.03.2023
(51) Int. Cl.: C23C 4/134, C23C 4/129, C23C 4/11, F01D 5/28, F01D 25/00, F02C 7/00, C23C 28/00, B05B 7/22

(54) **METHOD FOR APPLYING THERMAL BARRIER COATING AND HEAT RESISTANT MEMBER**

(30) Priority: 18.03.2022 JP 2022043646
(71) Applicant: Mitsubishi Heavy Industries Aero Engines, Ltd., Komaki-shi, Aichi 485-0826, (JP); Fujimi Incorporated, Kiyosu-shi, Aichi 452-8502 (JP); Tocalo Co., Ltd., Kobe-shi, Hyogo 650-0047 (JP)
(72) Inventor: KINOUCHI, Arata, Komaki-shi, Aichi 485-0826 (JP); MASUDA, Takaya, Kiyosu-shi, Aichi 452-8502 (JP); HABU, Yoichiro, Akashi-shi, Hyogo 674-0093 (JP); TAKAGI, Kaito, Akashi-shi, Hyogo 674-0093 (JP); NODA, Kazuo, Funabashi-shi, Chiba 274-0052 (JP)
(74) Representative: Studio Torta S.p.A.
(86) International application number: PCT/JP2023/008508
(87) International publication number: WO 2023/176577

(57) **Abstract**

A method for applying a thermal barrier coating according to an embodiment, includes: a step of forming a top coat layer on a bond coat layer formed on a heat-resistant alloy base material of an object. The step of forming the top coat layer includes forming the top coat layer by thermal-spraying a suspension, which contains ceramic powder, with atmospheric pressure plasma spraying, while cooling a portion of a plasma flame by supplying water as a cooling fluid to a periphery of the plasma flame at a supply rate of not less than 25 ml/min and not greater than 100 ml/min.

## Description

### TECHNICAL FIELD

The present disclosure relates to a method for applying a thermal barrier coating and a heat-resistant member.

This application claims the priority of Japanese Patent Application No. 2022-043646 filed on March 18, 2022, the content of which is incorporated herein by reference.

### BACKGROUND

It is known that a thermal barrier coating (TBC) is provided on a heat-resistant member, which is exposed to a high-temperature combustion gas, such as a combustor panel or a turbine blade in an aircraft engine, or a turbine blade or a ring segment in an industrial gas turbine. Such thermal barrier coating includes a bond coat layer formed on a heat-resistant alloy base material, and a top coat layer as a thermal barrier layer formed on the bond coat layer.

The bond coat layer is formed on the heat-resistant alloy base material by, for example, thermal spraying (see, for example, Patent Document 1). Further, since the top coat layer is difficult to ensure desired thermal cycle durability with, for example, atmospheric pressure plasma spraying (APS), in order to ensure heat cycle durability, the top coat layer may be formed by electron-beam physical vapor deposition (EB-PVD) so as to internally include a crack which is called a vertical crack extending in a thickness direction of the top coat layer (see, for example, Patent Document 2).

### Citation List

### Patent Literature

Patent Document 1: WO2016/076305A
Patent Document 2: JP2019-065384A

### SUMMARY

### Technical Problem

An initial cost of a device for performing electron-beam physical vapor deposition is not less than ten times as high as that of a thermal spraying device, etc. Further, a running cost for forming a layer by electron-beam physical vapor deposition is about ten times as high as a running cost for forming a layer by thermal spraying, etc. Furthermore, a speed of layer formation by electron-beam physical vapor deposition is as low as about a fraction of a speed of layer formation by thermal spraying, etc. Therefore, there is a demand for a method for forming the top coat layer of the thermal barrier coating at a lower cost, while ensuring performance such as thermal barrier properties or heat cycle durability as the top coat layer.

In view of the above, an object of at least one embodiment of the present disclosure is to suppress the cost of the thermal barrier coating in the heat-resistant member. In order to suppress the cost, it is necessary to improve the thermal barrier properties or heat cycle durability in the top coat of the thermal barrier coating formed by thermal spraying, etc.

### Solution to Problem

(1) A method for applying a thermal barrier coating according to at least one embodiment of the present disclosure, includes: a step of forming a top coat layer on a bond coat layer formed on a heat-resistant alloy base material of an object. The step of forming the top coat layer includes forming the top coat layer by thermal-spraying a suspension, which contains ceramic powder, with atmospheric pressure plasma spraying, while cooling a portion of a plasma flame by supplying water as a cooling fluid to a periphery of the plasma flame at a supply rate of not less than 25 ml/min and not greater than 100 ml/min.
(2) A heat-resistant member according to at least one embodiment of the present disclosure, has the top coat layer formed by the method for applying the thermal barrier coating according to the above method (1).

### Advantageous Effects

According to at least one embodiment of the present disclosure, it is possible to suppress a cost of a thermal barrier coating in a heat-resistant member.

### BRIEF DESCRIPTION OF DRAWINGS

FIG. 1 is a schematic cross-sectional view of a heat-resistant member with a thermal barrier coating applied by a method for applying the thermal barrier coating according to some embodiments.
FIG. 2 is a view showing the appearance of a combustor panel, as an example of the heat-resistant member, for an aircraft engine.
FIG. 3 is a flowchart showing a procedure of the method for applying the thermal barrier coating according to some embodiments.
FIG. 4 is a view for describing an outline of a device related to the method for applying the thermal barrier coating according to some embodiments.
FIG. 5 is a table showing application conditions common to Examples 1 to 3 and Comparative Example.
FIG. 6 is a table showing test results when a flat-plate material is used as a heat-resistant alloy base material.
FIG. 7 is a graph showing a test result of a thermal cycle durability test using a cylindrical member.
FIG. 8A is a SEM image of a cross section of a test piece where a top coat layer is formed under the same application condition as in Example 1.
FIG. 8B is a grayscale image of a region surrounded by a dashed line in FIG. 8A, which is color-coded by crystal orientation through image processing.
FIG. 8C is a graph showing a crystal grain size distribution in the region surrounded by the dashed line in FIG. 8A.
FIG. 9A is a SEM image of a cross section of a test piece where the top coat layer is formed under the same application condition as in Comparative Example.
FIG. 9B is a grayscale image of a region surrounded by a dashed line in FIG. 9A, which is color-coded by crystal orientation through image processing.
FIG. 9C is a graph showing a crystal grain size distribution in the region surrounded by the dashed line in FIG. 9A.
FIG. 10 is a graph showing a relationship between an amount of water supplied from a cooling fluid supply part and a deposition rate which is a film thickness per one path of thermal spraying during application of the top coat layer.

### DETAILED DESCRIPTION

Some embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

### (Regarding thermal barrier coating 3)

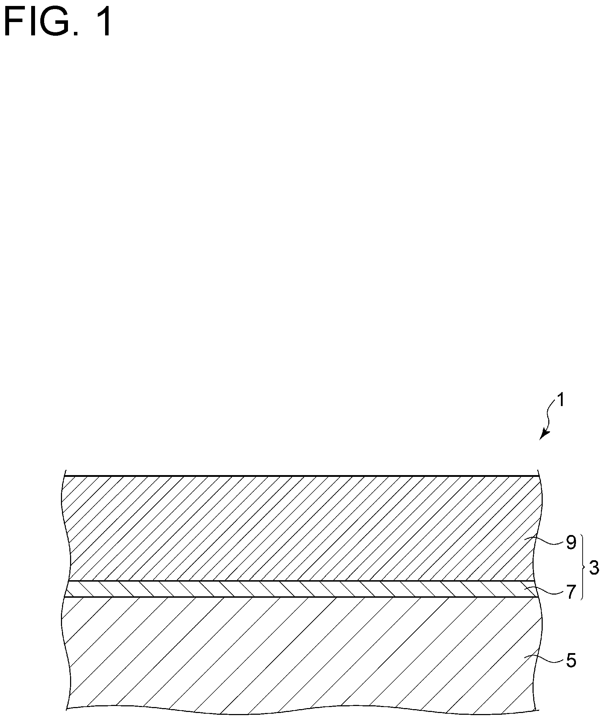

FIG. 1 is a schematic cross-sectional view of a heat-resistant member 1 with a thermal barrier coating 3 applied by a method for applying the thermal barrier coating according to some embodiments.

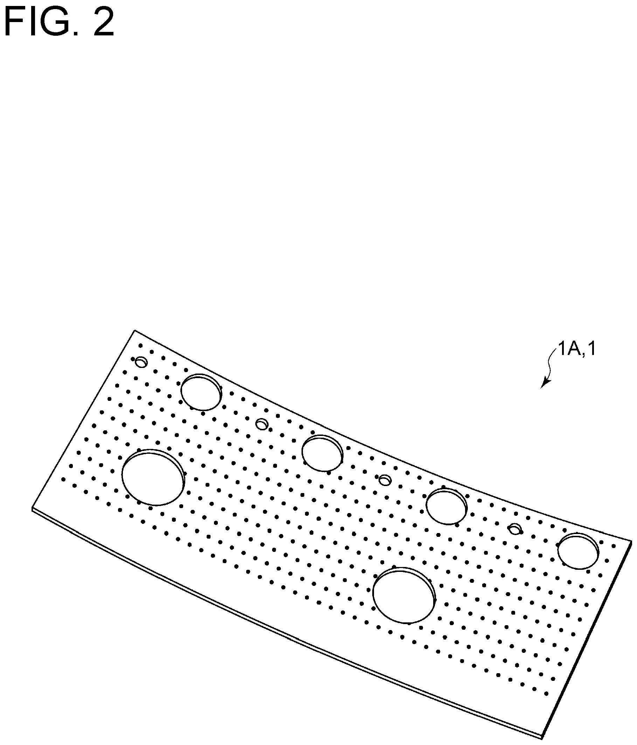

FIG. 2 is a view showing the appearance of a combustor panel 1A, as an example of the heat-resistant member 1, for an aircraft engine.

It is known that the thermal barrier coating (TBC) 3 for thermal barrier of the heat-resistant member 1 is formed on the heat-resistant member 1 such as the combustor panel 1A or a turbine blade for the aircraft engine, or a turbine blade or a ring segment for an industrial gas turbine.

A metal bond layer (bond coat layer) 7 and a top coat layer 9 as a thermal barrier layer are formed in sequence on a heat-resistant alloy base material (base material) 5 of the heat-resistant member 1 according to some embodiments. That is, in some embodiments, the thermal barrier coating 3 includes the bond coat layer 7 and the top coat layer 9.

The heat-resistant alloy base material 5 according to some embodiments is formed by, for example, a nickel-based alloy. Whereby, heat resistance of the heat-resistant alloy base material 5 is improved.

The bond coat layer 7 according to some embodiments is formed by, for example, an MCrAlY alloy (M indicates a metallic element such as Ni, Co, or Fe, or a combination of at least two of the above-described metallic elements).

The top coat layer 9 according to some embodiments is preferably formed by a ZrO₂-based material, such as YSZ (yttria-stabilized zirconia) which is ZrO₂ partially or fully stabilized with Y₂O₃. Further, the top coat layer 9 according to some embodiments may be formed by any of DySZ (dysprosia stabilized zirconia), ErSZ (erbia stabilized zirconia), Gd₂Zr₂O₇, or Gd₂Hf₂O₇.

Whereby, the thermal barrier coating 3 having excellent thermal barrier properties is obtained.

### (Flowchart)

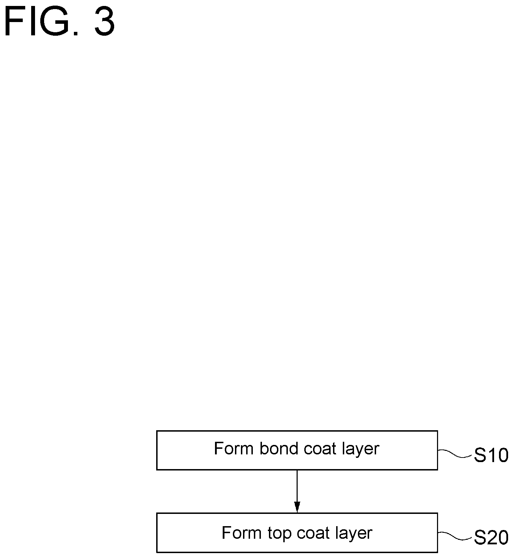

FIG. 3 is a flowchart showing a procedure of the method for applying the thermal barrier coating according to some embodiments. The method for applying the thermal barrier coating according to some embodiments includes a step S10 of forming the bond coat layer 7 and a step S20 of forming the top coat layer 9.

In some embodiments, the step S10 of forming the bond coat layer 7 is a step of forming the bond coat layer 7 on the heat-resistant alloy base material 5 with thermal spraying. In some embodiments, the step S10 of forming the bond coat layer 7 may be, for example, a step of forming the bond coat layer on the heat-resistant alloy base material 5 with atmospheric pressure plasma spraying.

That is, in some embodiments, the step S10 of forming the bond coat layer 7 may include thermal-spraying powder such as the MCrAlY alloy as a thermal spray material onto a surface of the heat-resistant alloy base material 5 with atmospheric pressure plasma spraying.

In some embodiments, the step S20 of forming the top coat layer 9 is a step of forming the top coat layer 9 on the bond coat layer 7 formed on the heat-resistant alloy base material 5 of the heat-resistant member 1 which is a thermal spray object. In some embodiments, the step S20 of forming the top coat layer 9 includes forming the top coat layer by thermal-spraying a suspension, which contains ceramic powder, with atmospheric pressure plasma spraying. That is, in some embodiments, the thermal spraying performed in the step S20 of forming the top coat layer 9 is suspension atmospheric pressure plasma spraying (SAPS). In some embodiments, the step S20 of forming the top coat layer 9 includes thermal-spraying a suspension, which is obtained by dispersing ceramic powder as the thermal spray material in a solvent, onto a surface of the bond coat layer 7 with atmospheric pressure plasma spraying.

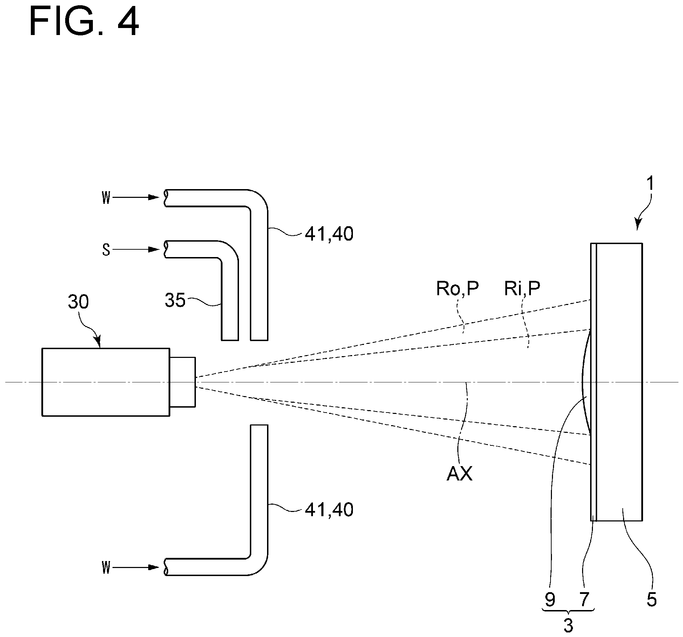

In suspension atmospheric pressure plasma spraying, a thermal spray material supplied as a suspension S is sprayed onto a surface of the thermal spray object by a plasma flame P blown from a nozzle of a thermal spray gun (see FIG. 4B described later).

In some embodiments, the step S20 of forming the top coat layer 9 includes forming the top coat layer 9 by thermal-spraying the suspension S, which contains the ceramic powder, with atmospheric pressure plasma spraying, while cooling a portion of the plasma flame with a cooling fluid from the periphery of the plasma flame P, as described in detail later.

Thermal spraying conditions in the step S20 of forming the top coat layer 9 will be described later.

### (Outline of device configuration)

FIG. 4 is a view for describing an outline of a device related to the method for applying the thermal barrier coating according to some embodiments.

As shown in FIG. 4, the method for applying the thermal barrier coating according to some embodiments applies the top coat layer 9 by using a thermal spray gun 30 for performing atmospheric pressure plasma spraying, a supply part 35 for supplying the suspension S containing powder of the thermal spray material for the top coat layer 9, and a cooling fluid supply part (water shroud) 40 for supplying water W as the cooling fluid from the periphery of the plasma flame P. In the method for applying the thermal barrier coating according to some embodiments, in addition to these devices shown in FIG. 4, although not shown, a thermal spray control panel, a suspension supply device, a supply device for the water W as the cooling fluid, etc. is also included in the device configuration. In FIG. 4, a device configuration related to formation of the top coat layer 9 is not illustrated.

The cooling fluid supply part 40 includes a plurality of nozzles 41 disposed, for example, downstream of the suspension S supply part 35 in an injection direction of the plasma flame P. For example, the plurality of nozzles 41 are disposed along the circumferential direction centered on a virtual central axis AX of the plasma flame P along the injection direction of the plasma flame P, so as to surround the periphery of the plasma flame P. The cooling fluid supply part 40 is configured such that the water W from the plurality of nozzles 41 is injected toward the central axis AX. The cooling fluid supply part 40 is not limited to the above-described form as long as the cooling fluid supply part 40 is configured such that the water W is injected toward the central axis AX.

By injecting the water W from the cooling fluid supply part 40 toward the plasma flame P, a temperature of the plasma flame P decreases in a radially outer region (outer region Ro) of the plasma flame P, which is centered on the central axis AX. Therefore, the ceramic powder present in the outer region Ro, that is, raw-material powder for the top coat layer 9 collides with the surface of the thermal spray object (the surface of the bond coat layer 7) without being melted, and thus does not adhere (weld) to the surface of the thermal spray object.

However, in a radially inner region (inner region Ri) of the plasma flame P, which is centered on the central axis AX, the plasma flame P is hardly influenced by the water W, and a temperature in the inner region Ri hardly decreases. Therefore, the raw-material powder for the top coat layer 9, which is present in the inner region Ri, collides with the surface of the bond coat layer 7 in a molten state, and thus is deposited on the surface of the bond coat layer 7.

Even in a case where the water W is not injected from the cooling fluid supply part 40 toward the plasma flame P, the temperature of the plasma flame P is lower in the radially outer region of the plasma flame P, which is centered on the central axis AX, than in the radially inner region centered on the central axis AX. Therefore, the ceramic powder present in the outer region, that is, the raw-material powder for the top coat layer 9 collides with the surface of the thermal spray object (the surface of the bond coat layer 7) without being sufficiently heated, and thus microstructure of the top coat layer 9 becomes coarse.

For example, when the suspension S is supplied toward the plasma flame P from the radially outer side of the plasma flame P as in the device configuration shown in FIG. 4, ceramic powder with a relatively small particle size in the suspension S joins a flow of the plasma flame in the outer region Ro of the plasma flame P before reaching the inner region Ri.

Further, ceramic powder with a relatively large particle size in the suspension S has a relatively large inertial force moving along the radial direction centered on the central axis AX, and therefore penetrates the inner region Ri of the plasma flame P, reaches the outer region Ro present beyond the inner region Ri, and joins the flow of the plasma flame in the outer region Ro.

Therefore, the ceramic powder with the relatively small particle size and the ceramic powder with the relatively large particle size in the suspension S do not adhere (weld) to the bond coat layer 7. That is, in the method for applying the thermal barrier coating according to some embodiments, remaining ceramic powder, excluding the ceramic powder with the relatively small particle size in the suspension S and the ceramic powder with the relatively large particle size, is deposited on the surface of the bond coat layer 7.

Further, in the method for applying the thermal barrier coating according to some embodiments, it is possible to suppress the adhesion (weld), to the bond coat layer 7, of the ceramic powder which is insufficiently heated in the radially outer region of the plasma flame P when the water W is not injected toward the plasma flame P as described above.

As a result, the microstructure of the top coat layer 9 is densified.

Thus, it is possible to relatively densify the microstructure of the thermal sprayed layer by thermal-spraying the suspension, which contains the ceramic powder, with atmospheric pressure plasma spraying, while cooling the portion of the plasma flame with the cooling fluid from the periphery of the plasma flame.

However, in the thermal barrier coating, it is required to suppress heat transfer to a base material side by keeping thermal conductivity low, but the densification of the microstructure leads to an increase in thermal conductivity. Therefore, thermal-spraying the suspension, which contains the ceramic powder, with atmospheric pressure plasma spraying, while cooling the portion of the plasma flame with the cooling fluid from the periphery of the plasma flame has not been done so far from the viewpoint of suppressing the densification of the microstructure of the thermal sprayed layer.

As a result of intensive studies by the present inventors, it was found that the increase in thermal conductivity is kept relatively low although the microstructure of the top coat layer 9 is relatively densified, when the top coat layer 9 is formed by thermal-spraying the suspension, which contains the ceramic powder, with atmospheric pressure plasma spraying, while cooling the portion of the plasma flame P with the cooling fluid from the periphery of the plasma flame P. It was also found that thermal cycle durability is significantly improved by relatively densifying the microstructure of the top coat layer 9.

That is, it was found that the application method that was previously thought to be unsuitable for forming the thermal barrier layer (top coat layer 9) in thermal barrier coating 3 is suitable for forming the thermal barrier layer (top coat layer 9) in thermal barrier coating 3.

With the method for applying the thermal barrier coating according to some embodiments, the top coat layer 9 can be formed at low cost without performing electron-beam physical vapor deposition, and the thermal cycle durability in the thermal barrier coating 3 can be improved.

In the method for applying the thermal barrier coating according to some embodiments, the step S20 of forming the top coat layer 9 preferably includes supplying the water W as the cooling fluid to the periphery of the plasma flame P.

By using the water W as the cooling fluid, a good cooling effect can be obtained at low cost, for example, in addition to easy availability of the cooling fluid, the periphery of the plasma flame P can efficiently be cooled since latent heat of vaporization is relatively large.

Further, in the method for applying the thermal barrier coating according to some embodiments, as described later, the step S20 of forming the top coat layer 9 preferably includes supplying the water W to the periphery of the plasma flame P at a supply rate of not greater than 100 ml/min.

As a result of intensive studies by the present inventors, it was found that the thermal cycle durability in the thermal barrier coating 3 is significantly improved as described later, if the step S20 of forming the top coat layer 9 includes supplying the water W to the periphery of the plasma flame P at the supply rate of not greater than 100 ml/min.

Therefore, with the method for applying the thermal barrier coating according to some embodiments, it is possible to significantly improve the thermal cycle durability in the thermal barrier coating 3.

In the method for applying the thermal barrier coating according to some embodiments, a material of the above-described ceramic powder, that is, the raw-material powder for the top coat layer 9 preferably contains any of yttria-stabilized zirconia, dysprosia stabilized zirconia, erbia stabilized zirconia, Gd₂Zr₂O₇, or Gd₂Hf₂O₇.

Whereby, the thermal barrier coating 3 having excellent thermal barrier properties is obtained.

In the method for applying the thermal barrier coating according to some embodiments, the heat-resistant alloy base material 5 is preferably a nickel-based alloy base material.

Whereby, heat resistance of the heat-resistant alloy base material 5 is improved.

The heat-resistant member 1 according to some embodiments has the top coat layer 9 formed by the method for applying the thermal barrier coating, which is described above.

Whereby, it is possible to improve the thermal cycle durability of the thermal barrier coating 3 while suppressing the manufacturing cost of the heat-resistant member 1.

### (Regarding Examples)

Hereinafter, Examples will be described in which the top coat layer 9 is formed by the method for applying the thermal barrier coating according to some embodiments.

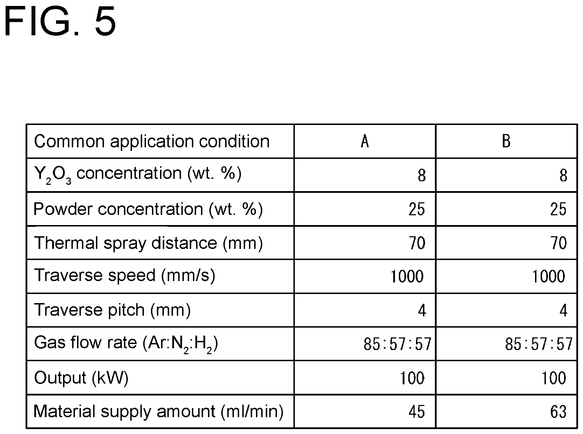

FIG. 5 is a table showing application conditions common to Examples 1 to 3 and Comparative Example.

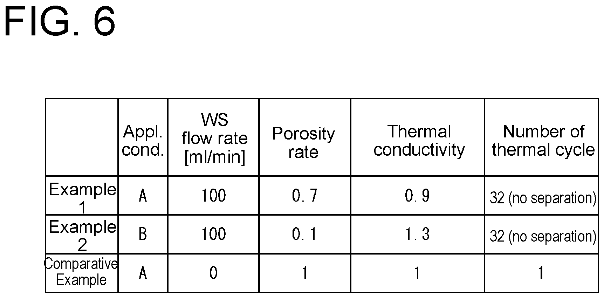

FIG. 6 is a table showing test results when a flat-plate material is used as the heat-resistant alloy base material 5. In FIG. 6, the test results of Example 1, Example 2, and Comparative Example are expressed as relative values with the test result of Comparative Example set at 1. FIG. 6 shows the results of all tests conducted under the same thermal cycle test conditions.

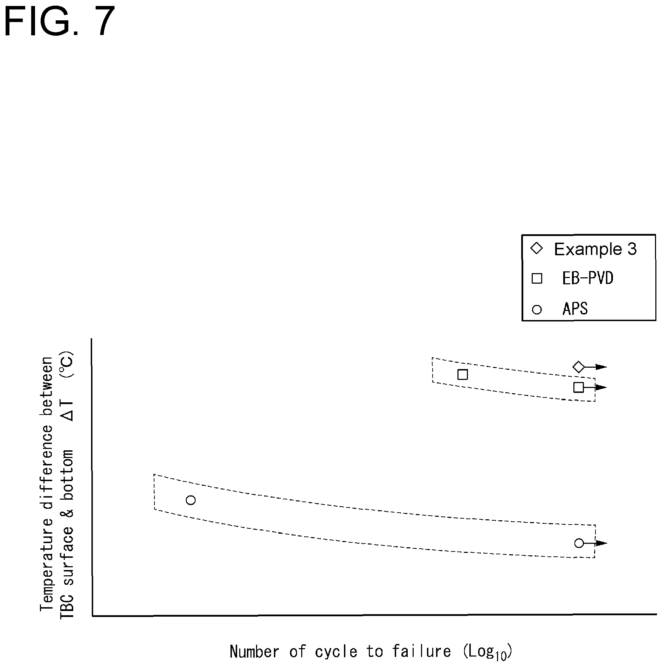

FIG. 7 is a graph showing a test result of a thermal cycle durability test for Example 3.

An application condition in Example 1, Example 3, and Comparative Example is referred to as Application Condition A, and an application condition in Example 2 is referred to as Application Condition B.

A dispersion medium for the suspension S and a supply amount of the suspension S (material supply amount) are different between Application Condition A and Application Condition B in respective Examples and Comparative Example, but the following respective conditions are the same.

That is, the concentration of Y₂O₃ in the suspension S is 8 wt% and the concentration of yttria stabilized zirconia powder is 25 wt%.

A thermal spray distance was 70 mm, a traverse speed was 1000 mm/s, and a traverse pitch was 4 mm.

The ratio of gas flow rate was 85:57:57 between Ar, N₂, and H₂.

A plasma output, that is, input power to the thermal spray gun 30 was 100 kW.

The dispersion medium for the suspension S was anhydrous ethanol.

The supply amount of the suspension S (material supply amount) was 45 ml/min under Application Condition A, and 63 ml/min under Application Condition B.

The amount of the water W supplied from the cooling fluid supply part 40 was 100 ml/min in Example 1 to Example 3, and 0 ml/min in Comparative Example. In FIG. 6, the amount of the water W supplied from the cooling fluid supply part 40 is expressed as WS flow rate which is short for a water shroud flow rate.

In Example 1, the porosity rate of the top coat layer 9 was 0.7 as a relative value with Comparative Example set at 1, and the thermal conductivity of the top coat layer 9 was 0.9 as a relative value with Comparative Example set at 1. Further, even though the number of thermal cycles in the thermal cycle durability test was 32 as a relative value with Comparative Example set at 1, no separation occurred.

The porosity rate was calculated from SEM images of cross sections of test pieces in respective Examples and Comparative Example by dividing a total area of pore portions in a certain range in the images by an entire area in that range, and was expressed as a relative value with Comparative Example set at 1.

Further, in the thermal cycle durability test, when a temperature difference of 1000°C was repeatedly given, the number of repetitions until separation of the thermal barrier coating occurs in the test piece was obtained, and the number of thermal cycles, which is the number of repetitions, was expressed as a relative value with Comparative Example set at 1.

Comparing the test result of Example 1 with the test result of Comparative Example, the porosity rate decreases by 30%. The thermal conductivity does not increase, but on the contrary decreases by 10%. No separation occurs even at 32 times the number of thermal cycles of Comparative Example as described above, and the thermal cycle durability is significantly improved.

In Example 2, the porosity rate of the top coat layer 9 was 0.1 as a relative value with Comparative Example set at 1, and the thermal conductivity of the top coat layer 9 was 1.3 as a relative value with Comparative Example set at 1. Further, even though the number of thermal cycles in the thermal cycle durability test was 32 as a relative value with Comparative Example set at 1, no separation occurred.

Comparing the test result of Example 2 with the test result of Comparative Example, the porosity rate decreases by 90%. The thermal conductivity increases by only 30%. No separation occurs even at 32 times the number of thermal cycles of Comparative Example as described above, and the thermal cycle durability is significantly improved.

Unlike Example 1, Example 2, and Comparative Example, since Example 3 uses a cylindrical member as the heat-resistant alloy base material 5, thermal spraying is performed by also moving the thermal spray gun 30 while the heat-resistant alloy base material 5 is rotated around a central axis of the cylinder during thermal spraying. In Example 1, Example 2, and Comparative Example, thermal spraying is performed by moving only the thermal spray gun 30, while the heat-resistant alloy base material 5 is held stationary during thermal spraying.

As shown in FIG. 7, from Example 1 to Example 3, in the thermal cycle durability test where the temperature difference of 1000°C was given, the number of repetitions until separation of the thermal barrier coating occurs in the test piece resulted in equal to or not less than a test result in the test piece where the top coat layer 9 was formed by electron-beam physical vapor deposition (EB-PVD). It cannot be said that a test result in a test piece where the top coat layer 9 was formed by atmospheric pressure plasma spraying (APS) without the supply of the water W from the cooling fluid supply part 40 is better than the test result in the test piece where the top coat layer 9 was formed by electron-beam physical vapor deposition (EB-PVD)

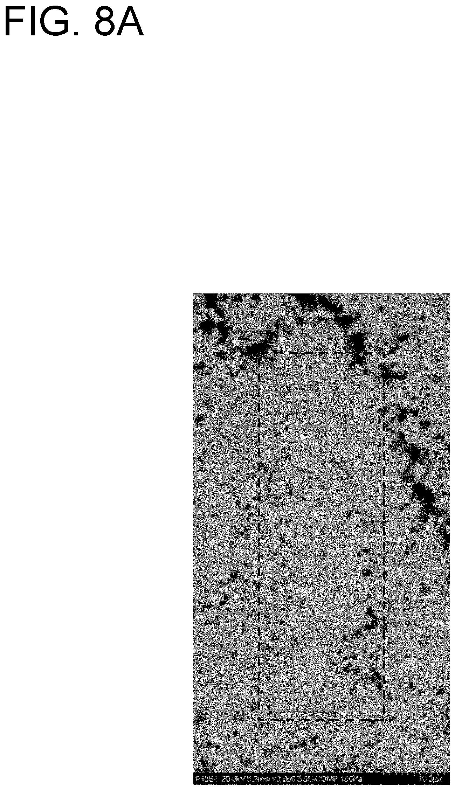

FIG. 8A is a SEM image of a cross section of the test piece where the top coat layer 9 is formed under the same application condition as in Example 1.

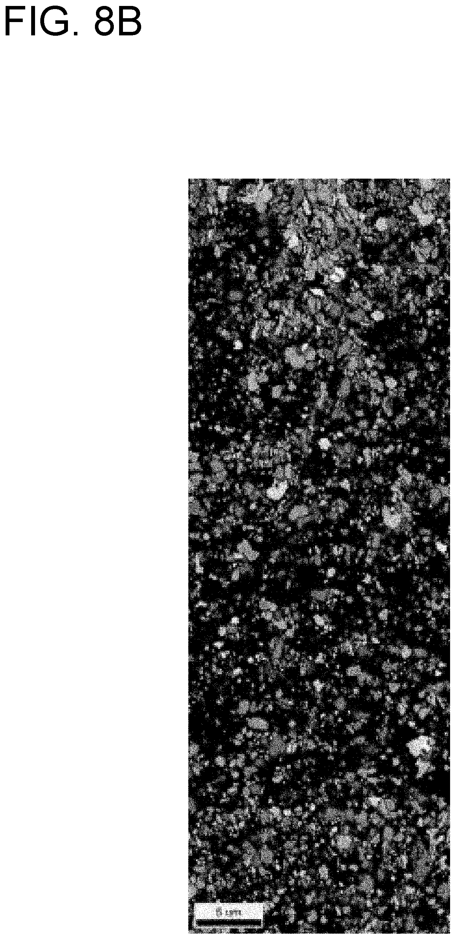

FIG. 8B is a grayscale image of a region surrounded by a dashed line in FIG. 8A, which is color-coded by crystal orientation through image processing.

Regions represented in black in FIG. 8B represent either pores, crystals whose crystal orientation could not be identified due to their small grain size, or amorphous states.

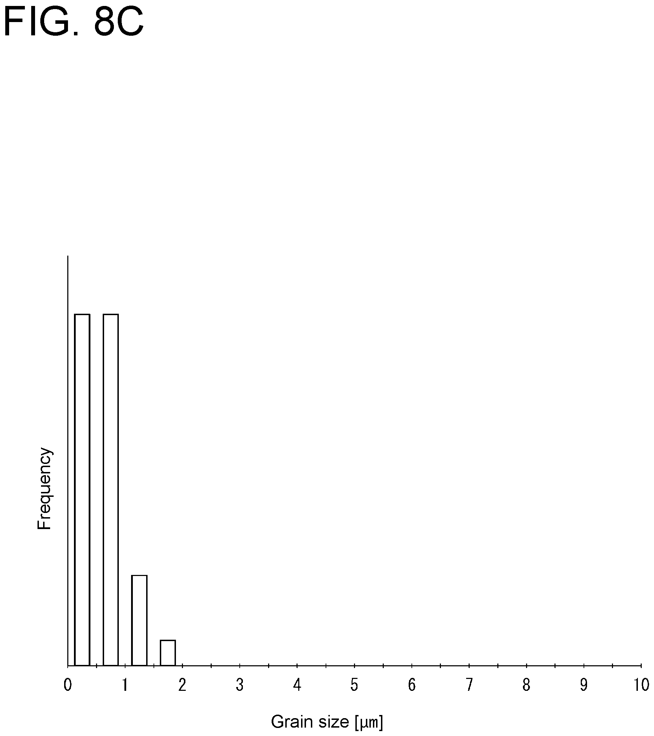

FIG. 8C is a graph showing a crystal grain size distribution in the region surrounded by the dashed line in FIG. 8A.

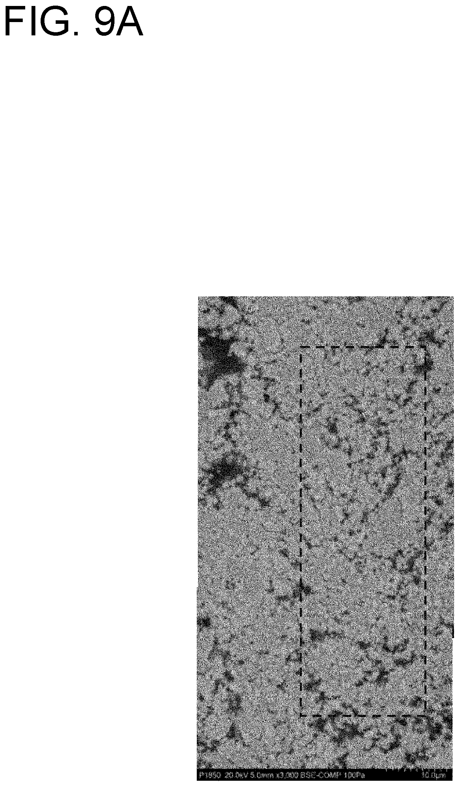

FIG. 9A is a SEM image of a cross section of the test piece where the top coat layer 9 is formed under the same application condition as in Comparative Example described above.

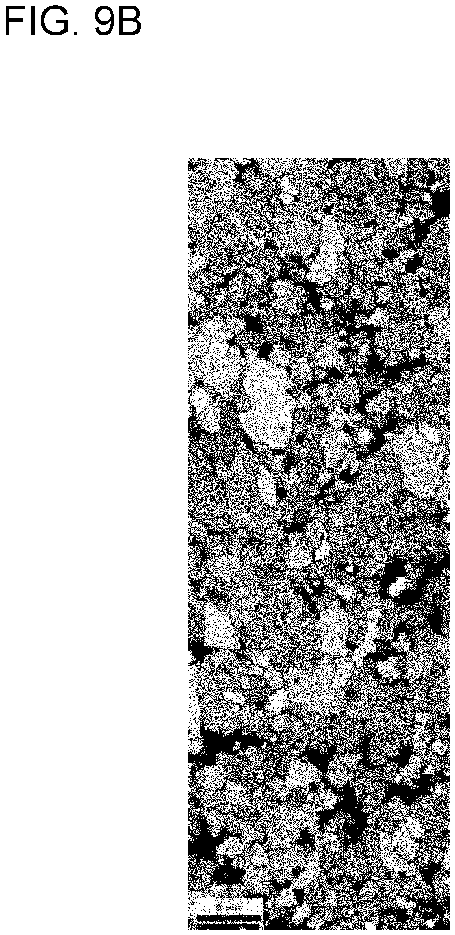

FIG. 9B is a grayscale image of a region surrounded by a dashed line in FIG. 9A, which is color-coded by crystal orientation through image processing.

Regions represented in black in FIG. 9B represent pores.

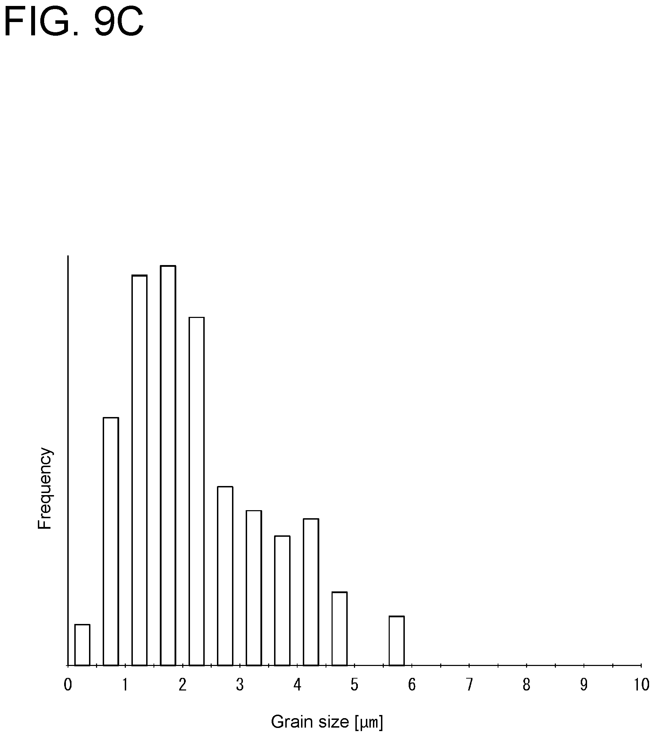

FIG. 9C is a graph showing a crystal grain size distribution in the region surrounded by the dashed line in FIG. 9A.

An average grain size of the crystals in the top coat layer 9 in the test piece shown in FIGs. 8A to 8C was 0.36 µm. Further, the average grain size of the crystals in the top coat layer 9 in the test piece shown in FIGs. 9A to 9C was 1.03 µm.

As can be seen from FIGs. 8A to 8C and FIGs. 9A to 9C, cracks in the top coat layer 9 can be suppressed and the average grain size of the crystals can be reduced by performing atmospheric pressure plasma spraying using the suspension while supplying the water W from the cooling fluid supply part 40.

The average grain size of the crystals in the top coat layer 9 is preferably not less than 0.3 µm and not greater than 0.8 µm.

### (Regarding amount of water W supplied from cooling fluid supply part 40)

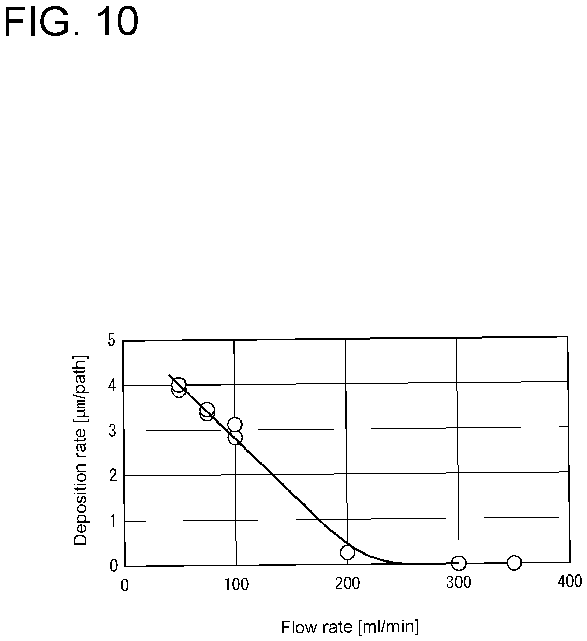

FIG. 10 is a graph showing a relationship between the amount of the water W supplied from the cooling fluid supply part 40 and a deposition rate which is a film thickness per one path of thermal spraying during application of the top coat layer 9.

As shown in FIG. 10, the deposition rate was 3.9 or 4.0 µm/path when the supply amount of the water W was 50 ml/min, the deposition rate was 3.4 or 3.5 µm/path when the supply amount of the water W was 75 ml/min, the deposition rate was 2.8 or 3.1 µm/path when the supply amount of the water W was 100 ml/min, the deposition rate was 0.3 µm/path when the supply amount of the water W was 200 ml/min, the deposition rate was 0 µm/path when the supply amount of the water W was 300 ml/min, and the deposition rate was 0 µm/path when the supply amount of the water W was 400 ml/min.

As shown in FIG. 10, the deposition rate decreases as the amount of the water W supplied from the cooling fluid supply part 40 increases.

Further, from the test results in Example 1 to Example 3 described above, it was found that the thermal cycle durability in the thermal barrier coating 3 is significantly improved, if the step S20 of forming the top coat layer 9 includes supplying the water W as the cooling fluid to the periphery of the plasma flame P at the supply rate of not less than 25 ml/min and not greater than 100 ml/min.

The present disclosure is not limited to the above-described embodiments, and also includes an embodiment obtained by modifying the above-described embodiments or an embodiment obtained by combining these embodiments as appropriate.

The contents described in the above embodiments would be understood as follows, for instance.
(1) A method for applying a thermal barrier coating according to at least one embodiment of the present disclosure, includes: a step S20 of forming a top coat layer 9 on a bond coat layer 7 formed on a heat-resistant alloy base material 5 of an object. The step S20 of forming the top coat layer 9 includes forming the top coat layer 9 by thermal-spraying a suspension S, which contains ceramic powder, with atmospheric pressure plasma spraying, while cooling a portion of a plasma flame P by supplying water W as a cooling fluid to a periphery of the plasma flame P at a supply rate of not less than 25 ml/min and not greater than 100 ml/min.

With the above method (1), the top coat layer 9 can be formed at low cost without performing electron-beam physical vapor deposition, and the thermal cycle durability in the thermal barrier coating 3 can be improved.

With the above method (1), by using the water W as the cooling fluid, a good cooling effect can be obtained at low cost, for example, in addition to easy availability of the cooling fluid, the periphery of the plasma flame P can efficiently be cooled since latent heat of vaporization is relatively large.

As a result of intensive studies by the present inventors, it was found that the thermal cycle durability in the thermal barrier coating 3 is significantly improved, if the step of forming the top coat layer 9 includes supplying the water W as the cooling fluid to the periphery of the plasma flame P at the supply rate of not less than 25 ml/min and not greater than 100 ml/min.

With the above method (1), it is possible to significantly improve the thermal cycle durability in the thermal barrier coating 3.

(2) In some embodiments, in the above method (1), the ceramic powder preferably contains any of yttria-stabilized zirconia, dysprosia stabilized zirconia, erbia stabilized zirconia, Gd₂Zr₂O₇, or Gd₂Hf₂O₇.

With the above method (2), the thermal barrier coating 3 having excellent thermal barrier properties is obtained.

(3) In some embodiments, in the above method (1) or (2), the heat-resistant alloy base material 5 is preferably a nickel-based alloy base material.

With the above method (3), heat resistance of the heat-resistant alloy base material 5 is improved.

(4) A heat-resistant member 1 according to at least one embodiment of the present disclosure, has the top coat layer 9 formed by the method for applying the thermal barrier coating according to any of the above (1) to (3).

With to the above configuration (4), it is possible to improve the thermal cycle durability of the thermal barrier coating 3 while suppressing the manufacturing cost of the heat-resistant member 1.

### Reference Signs List

- 1: Heat-resistant member
- 3: Thermal barrier coating
- 5: Heat-resistant alloy base material (base material)
- 7: Metal bond layer (bond coat layer)
- 9: Top coat layer
- 30: Thermal spray gun
- 35: Supply part
- 40: Cooling fluid supply part (water shroud)

## Claims

1. A method for applying a thermal barrier coating, comprising:
a step of forming a top coat layer on a bond coat layer formed on a heat-resistant alloy base material of an object,
wherein the step of forming the top coat layer includes forming the top coat layer by thermal-spraying a suspension, which contains ceramic powder, with atmospheric pressure plasma spraying, while cooling a portion of a plasma flame by supplying water as a cooling fluid to a periphery of the plasma flame at a supply rate of not less than 25 ml/min and not greater than 100 ml/min.

2. The method for applying the thermal barrier coating according to claim 1,
wherein the ceramic powder contains any of yttria-stabilized zirconia, dysprosia stabilized zirconia, erbia stabilized zirconia, Gd₂Zr₂O₇, or Gd₂Hf₂O₇.

3. The method for applying the thermal barrier coating according to claim 1 or 2,
wherein the heat-resistant alloy base material is a nickel-based alloy base material.

4. A heat-resistant member having the top coat layer formed by the method for applying the thermal barrier coating according to claim 1 or 2.
